# EUROPEAN PATENT APPLICATION

(11) **EP 2 832 758 A1**
(43) Date of publication of application: **04.02.2015**
(21) Application number: 13768023.7
(22) Date of filing: 28.03.2013
(51) Int. Cl.: C08G 18/48, C08G 18/76, A47C 7/18, A47C 27/14, C08G 101/00

(54) **POLYURETHANE FOAM FOR SEAT PAD**

(30) Priority: 29.03.2012 JP 2012077794
(71) Applicant: Bridgestone Corporation, Tokyo 104-8340 (JP)
(72) Inventor: YOSHITOMI, Kosuke, Kanagawa 288-8510 (JP); KAWAMURA, Akiko, Kanagawa 244-8510 (JP)
(74) Representative: Oxley, Robin John George
(86) International application number: PCT/JP2013/059388
(87) International publication number: WO 2013/147088

(57) **Abstract**

Provided is a polyurethane foam for a seat pad which simultaneously achieves higher levels of shakiness-reducing properties and stress relaxation-reducing properties, thus providing a comfortable ride and thus having no problem of shakiness, and which exhibits only a small increase in the hardness under low-temperature environment (for example, 5°C or less). Specifically, provided is a polyurethane foam for a seat pad produced by foam-molding a foaming liquid containing (A) a polyol component and (B) a polyisocyanate component, wherein the polyol component (A) includes, based on said polyol component, 30% to 55% by mass of (a-1) a polyether polyol, wherein said polyether polyol (a-1) is a block copolymer obtained through ring-opening polymerization of ethylene oxide (EO) and propylene oxide (PO), and has a molar ratio of repeating units derived from EO to repeating units derived from PO of 5/95 to 25/75 and a number average molecular weight of 6, 000 to 8, 000, and the polyol component (A) further includes, based on said polyol component, 2% to 20% by mass of (a-2) a polyether polyol, wherein said polyether polyol (a-2) is a block copolymer obtained through ring-opening polymerization of EO and PO, and has a molar ratio of repeating units derived from EO repeating unit derived from PO of 30/70 to 90/10 and a glass-transition point of -65°C or less.

## Description

### Technical Field

The present invention relates to a polyurethane foam for a seat pad, and particularly relates to a polyurethane foam for a seat pad that is suitable as a vehicle seat pad.

### Background Art

Polyurethane foams have been demanded to have various properties including mechanical properties, heat insulating properties, and vibration absorbing properties, depending on purposes, and, particularly in vehicle seat pads and the like, high repulsive elasticity and comfort such as comfort to sit have been demanded.

Vehicle seat pads often suffer such a problem that seats fail to support the human body due to the centrifugal force applied to the body when the vehicle changes lanes or goes round a curve, thus shaking the body. For reducing such shakiness, such measures have been made that (1) the molecular weight of a polyether polyol used as a raw material for the polyurethane foam is changed from a high molecular weight to a low molecular weight, (2) in repeating units derived from ethylene oxide and repeating units derived from propylene oxide in the polyether polyol, the proportion of the ethylene oxide units is increased, (3) the water content in the foaming liquid for forming a polyurethane foam is increased, and (4) the amount of the crosslinking agent is increased.

On taking the measures, however, there may be a problem that repulsive elasticity and air permeability of the resulting polyurethane foam is lowered, and the "stress relaxation", which is important for ride comfort, is deteriorated (increased). That is, there is a trade-off between shakiness-reducing properties and stress relaxation-reducing properties, i.e. when the shakiness is improved (lowered), the stress relaxation is deteriorated (increased), and, when the stress relaxation is improved, the shakiness is deteriorated. Therefore, it was difficult to retain both the shakiness-reducing properties and the stress relaxation-reducing properties at higher levels.

In order to solve such a problem, with regard to a polyurethane foam produced by foam-molding a polyurethane foaming liquid containing a polyol component and an isocyanate component as main components, the present inventors developed a lightweight polyurethane foam having excellent vibration absorbing properties, in which a polyether polyol having a molecular weight of from 3,000 to 12,000, an unsaturation degree of 0.03 mEq/g or less and a ratio of "molecular weight/number of functional group" of 1,000 to 3,000 is used as the polyol, and an organically-modified inorganic filler is mixed therein (see Patent Document 1), and further developed a polyurethane foam, in which the polyol component includes, based on the polyol component, 40% to 55% by mass of (i) a polyether polyol which is obtained through ring-opening polymerization of ethylene oxide and propylene oxide, and which has a molar ratio of repeating units derived from ethylene oxide to repeating units derived from propylene oxide of 5/95 to 25/75 and a number average molecular weight of 6, 000 to 8, 000, and the polyol component further contains, based on the polyol component, 5 to 15% by mass of (ii) a polyether polyol which is obtained through ring-opening homopolymerization of propylene oxide or through ring-opening polymerization of ethylene oxide and propylene oxide, and which has a molar ratio of repeating units derived from ethylene oxide to repeating units derived from propylene oxide of from 0/100 to 20/80 and a number average molecular weight of 600 to 2, 000, and an amount of water combined therein is 2.0 parts by mass or more relative to 100 parts by mass of all the polyol components (see Patent Document 2).

### Related Art Documents

### Patent Documents

Patent Document 1: JP-A-2008-127514
Patent Document 2: WO 2011/132645

### Summary of the Invention

### Problems to be solved by the Invention

When the polyurethane foam disclosed in Patent Document 1 was used as a vehicle seat pad, the seat pad sometimes shook during turning a corner. If a degree of shakiness was larger, it was expected that the inclination of the human body became steeper when a centrifugal acceleration was applied thereto during turning a corner. Therefore, there has still been a room for improvement in the ride comfort.

Additionally, a degree of the shakiness was improved (lowered) in the polyurethane foam disclosed in Patent Document 2. However, the stress relaxation was not necessarily reduced, and there has been a room for improvement in the ride comfort. Furthermore, it was revealed that, in this polyurethane foam, for example, when it was placed in a low-temperature environment, its hardness increased, sometimes impairing the comfort to sit.

Thus, the problem to be solved by the present invention is to provide a polyurethane foam for a seat pad which simultaneously achieves higher levels of shakiness-reducing properties and stress relaxation-reducing properties, thus providing a comfortable ride and thus having no problem of shakiness, and which exhibits only a small increase in the hardness under low-temperature environment (for example, 5°C or less).

### Means for solving the Problems

The present inventors conducted intensive studies in order to solve the above-described problem. Consequently, the present inventors found that the above-described problem could be solved by a polyurethane foam produced by a foaming liquid containing (A) a polyol component and (B) a polyisocyanate component where the polyol component (A) contains specific two types of polyol components at specific amounts. The present invention was completed based on this finding.

That is, the present invention relates to the following [1] to [7].
[1] A polyurethane foam for a seat pad produced by foam-molding a foaming liquid containing (A) a polyol component and (B) a polyisocyanate component, wherein
   the polyol component (A) includes, based on the polyol component, 30% to 55% by mass of (a-1) a polyether polyol, wherein the polyether polyol (a-1) is a block copolymer obtained through ring-opening polymerization of ethylene oxide and propylene oxide, and has a molar ratio of repeating units derived from ethylene oxide to repeating units derived from propylene oxide of 5/95 to 25/75 and a number average molecular weight of 6,000 to 8,000, and
   the polyol component (A) further includes, based on the polyol component, 2% to 20% by mass of (a-2) a polyether polyol, wherein the polyether polyol (a-2) is a block copolymer obtained through ring-opening polymerization of ethylene oxide and propylene oxide, and has a molar ratio of repeating units derived from ethylene oxide to repeating units derived from propylene oxide of 30/70 to 90/10 and a glass-transition point of -65°C or less.
[2] The polyurethane foam for a seat pad according to above [1], wherein the polyisocyanate component (B) includes tolylene diisocyanate and/or diphenylmethane diisocyanate.
[3] The polyurethane foam for a seat pad according to above [1] or [2], wherein the foaming liquid includes the polyisocyanate component (B) in such a way that a molar ratio of isocyanate groups in the polyisocyanate component to active hydrogen groups in the foaming liquid is 60/100 to 120/100.
[4] The polyurethane foam for a seat pad according to any one of above [1] to [3], wherein the polyol component (A) further contains 1% to 10% by mass of (a-3) a polyether polyol which is obtained through ring-opening homopolymerization of ethylene oxide and which has a number average molecular weight of 350 to 2,000.
[5] The polyurethane foam for a seat pad according to any one of above [1] to [4], wherein the glass-transition point of the component (a-2) is -80°C to -65°C.
[6] The polyurethane foam for a seat pad according to any one of above [1] to [5], wherein the polyol component (A) further includes, based on the polyol component, 40% to 60% by mass of (a-5) a polymer polyol obtained through graft-copolymerization of an acrylonitrile-styrene copolymer to a polyether polyol, wherein the polyether polyol is obtained through ring-opening polymerization of ethylene oxide and propylene oxide, and has a molar ratio of repeating units derived from ethylene oxide to repeating units derived from propylene oxide of 5/95 to 25/75 and a number average molecular weight of 3,000 to 7,000.
[7] The polyurethane foam for a seat pad according to any one of above [1] to [6], further containing (E) a foam stabilizer.

### Advantages of the Invention

According to the present invention, a polyurethane foam for a seat pad which simultaneously achieves higher levels of shakiness-reducing properties and stress relaxation-reducing properties, thus providing a comfortable ride and having no problem of shakiness, and which exhibits only a small increase in the hardness under low-temperature environment (for example, 5°C or less) can be provided.

### Brief Description of the Drawing

[Fig. 1]

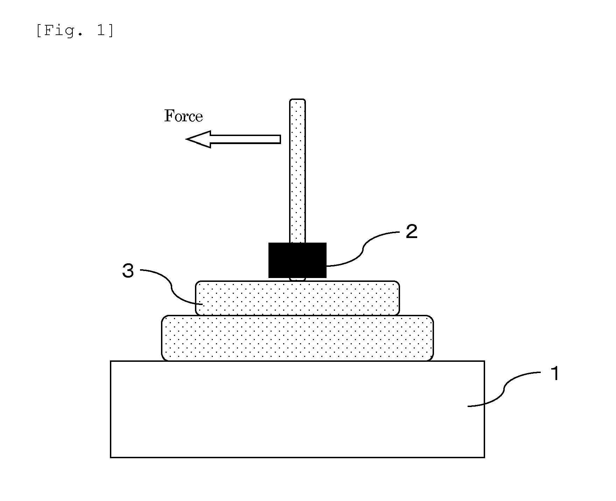

Fig. 1 is a schematic illustration showing an apparatus for measuring seat pads obtained in Examples and Comparative Examples for shaking angles.

### Embodiments for carrying out the Invention

The polyurethane foam for a seat pad of the present invention (which may be hereinafter referred simply to "polyurethane foam") is a polyurethane foam produced by foam-molding a foaming liquid containing (A) a polyol component and (B) a polyisocyanate component.

In addition, provisions referred to by "preferable " or "preferably" can voluntarily be selected, combinations of provisions referred to by "preferable" or "preferably" can be considered "more preferable."

Hereinafter, each of the components will be described in details.

### <(A) Polyol Component>

In the foaming liquid, the polyol component used as component (A) contains component (a-1) and component (a-2) described below as essential components.

### ((a-1) Polyether Polyol)

The polyether polyol for component (a-1) is a block copolymer which is obtained through ring-opening polymerization of ethylene oxide (which may hereinafter be referred to as "EO") and propylene oxide (which may hereinafter be referred to as "PO"), and is a polyether polyol having a comparatively higher molecular weight as it has a molar ratio of repeating units derived from ethylene oxide (which may hereinafter be referred to as "EO units") to repeating units derived from propylene oxide (which may hereinafter be referred to as "PO units") [EO unit/PO unit] of 5/95 to 25/75, and a number average molecular weight of 6,000 to 8,000. In particular, in terms of superior moldability and reactivity, it is preferable that a block including EO units be present at molecular ends, and it is more preferable that the interior of the molecule be a block including PO units and that the molecular ends be a block including EO units. That is, the amount of EO units present in the interior of the molecule is preferably 5mol% or less, more preferably 3mol% or less, yet more preferably substantially 0mol%.

Due to the presence of the component (a-1), stress relaxation-reducing properties will particularly be improved. As the component (a-1), one type of a polyether polyol may be used singularly, or two or more types of polyether polyols may be combined.

It is required that the molar ratio of EO units to PO units [EO units/PO units] be 5/95 to 25/75 as described above. The molar ratio [EO units/PO units] is preferably 8/92 to 25/75, more preferably 10/90 to 20/80.

Furthermore, it is required that the number average molecular weight be in a range of 6,000 to 8,000. When the number average molecular weight of component (a-1) is less than 6, 000, the repulsive elasticity may be lowered. On the other hand, when the number average molecular weight exceeds 8,000, the shakiness may not be overcome. In this point of view, the number average molecular weight is preferably in a range of from 7,000 to 8,000.

Additionally, in the present invention, the number average molecular weight refers to a value which is calculated in terms of polystyrene by gel permeation chromatography (GPC method).

In general, the number of hydroxyl groups contained in one molecule of component (a-1) is preferably 2 to 4, and particularly 3. When the number of hydroxyl groups is 4 or less, the viscosity of the raw material may not be increased.

As the polyether polyol for component (a-1), a polyether polyol having a low unsaturation degree is preferably used. More specifically, in general, the unsaturation degree is preferably 0.03 mEq/g or less. When the unsaturation degree of the high molecular weight polyether polyol is 0.03 mEq/g or less, the durability and the hardness of the polyurethane foam of the present invention may not be impaired. Additionally, the "unsaturation degree" in the present invention refers to a total unsaturation degree (mEq/g) measured by a method in which mercuric acetate is reacted with unsaturated bonds in the specimen, and resulting liberated acetic acid is titrated with potassium hydroxide according to JIS K 1557-1970.

The content of component (a-1) in component (A) is 30% to 55% by mass, preferably 35% to 50% by mass, more preferably 35% to 45% by mass, based on component (A), for the purpose of simultaneous achievement of superior shakiness-reducing properties and stress relaxation-reducing properties.

### ((a-2) Polyether Polyol)

The polyether polyol for component (a-2) is a block copolymer which is obtained through ring-opening polymerization of EO and PO, and is a polyether polyol having a molar ratio (EO/PO) of repeating units derived from EO to repeating units derived from PO of 30/70 to 90/10 and having a glass-transition point of -65°C or less. Due to the presence of component (a-2), an increase in the hardness of the polyurethane foam under low-temperature environment can be suppressed.

In component (a-2), the molar ratio of EO units to PO units (EO units/PO units) is preferably 30/70 to 85/15, more preferably 40/60 to 80/20, still more preferably 50/50 to 80/20, particularly preferably 55/45 to 75/25 for the purpose of simultaneous achievement of superior shakiness-reducing properties and stress relaxation-reducing properties. The number average molecular weight of component (a-2) is preferably 1,000 to 8,000, more preferably 1,000 to 7,000.

It is required that the glass-transition point of component (a-2) be -65°C or less, and the glass-transition point is preferably -80°C to -65°C, more preferably -70°C to -65°C.

In general, the number of hydroxyl groups contained in one molecule of component (a-2) is preferably 2 to 4, particularly preferably 3. When the number of hydroxyl groups is 4 or less, the viscosity of the raw material will not increase.

As the polyether polyol for component (a-2), a polyether polyol having a low unsaturation degree is preferably used in the same manner as component (a-1). More specifically, in general, the unsaturation degree is preferably 0.03 mEq/g or less. When the unsaturation degree of the low molecular weight polyether polyol is 0.03 mEq/g or less, the durability and the hardness of the polyurethane foam of the present invention may not be impaired.

As for component (a-2), one type of a polyether polyol may be used singularly, or two or more types of polyether polyols may be mixed. For example, two or more types of polyether polyols having different number average molecular weights may be mixed, and, in that case, a mixture of polyether polyols which has any of the above-described predetermined values of glass-transition points may be used.

The content of component (a-2) in component (A) is 2% to 20% by mass, preferably 2% to 15% by mass, more preferably 4% to 15% by mass based on component (A) for the purpose of suppressing an increase in the hardness under low-temperature environment.

### (Others for component (A))

As component (A), in general, polyols other than above-described components (a-1) and (a-2) may be used, and, for example, components (a-3) to (a-5) described below can be mentioned. In particular, at least one selected from components (a-3) and (a-4) is preferably used.

### ((a-3) polyether polyol)

The polyether polyol for component (a-3) is a polyether polyol which is obtained through ring-opening homopolymerization of EO and which has a number average molecular weight of 350 to 2,000. According to component (a-3), durability of the polyurethane foam will be improved. Additionally, component (a-3) includes those which are obtained "substantially" through ring-opening homopolymerization of EO and in which 5mol% or less (more preferably 3mol% or less, still more preferably 1mol% or less) of PO is copolymerized without significantly impairing the effects of the present invention.

In the above-described point of view, the number average molecular weight of component (a-3) is preferably 350 to 1, 500, more preferably 350 to 1,000, still more preferably 350 to 700. When the molecular weight is small, for example 1,000 or less, the component can also be regarded as a crosslinking agent.

In general, the number of hydroxyl groups contained in one molecule of component (a-3) may be 2 to 5, particularly preferably 4. When the number of hydroxyl groups is 5 or less, the viscosity of the raw material will not be increased.

In cases where component (A) includes component (a-3), the content of component (a-3) in polyol component (A) is preferably 1% to 10% by mass, more preferably 1% to 5% by mass for the purpose of improving the durability and reducing residual strain due to wet heat compression while suppressing generation of closed cells.

### ((a-4) polyether polyol)

The foaming liquid may contain polyether polyol (a-4) described below as a polyol component used for component (A).

The polyether polyol for component (a-4) is a polyether polyol of a comparatively low molecular weight which is obtained through ring-opening homopolymerization of PO and which has a number average molecular weight of 350 to 2,000. According to component (a-4) which is obtained through ring-opening homopolymerization of PO, the shakiness-reducing properties can particularly be further improved. Additionally, component (a-4) includes those which are obtained "substantially" through ring-opening homopolymerization of PO and in which 5mol% or less (more preferably 3mol% or less, still more preferably 1mol% or less) of EO is copolymerized without significantly impairing the effects of the present invention.

As for component (a-4), one type of a polyether polyol may be used singularly, or two or more types of polyether polyols may be combined.

Furthermore, when the number average molecular weight of component (a-4) is 600 or more, the stress relaxation may be reduced. On the other hand, when the number average molecular weight is 2, 000 or less, the shakiness may be further suppressed. From this point of view, the number average molecular weight of component (a-4) is preferably 650 to 1, 500, more preferably 700 to 1,200.

It is preferable that the number of hydroxyl groups contained in one molecule of component (a-4) be generally 2 to 4, particularly 3 in the same manner as the above-described high-molecular-weight polyether polyol. When the number of hydroxyl groups is 4 or less, the viscosity of the raw material will not increase.

In cases where component (A) includes component (a-4), the content of component (a-4) in polyol component (A) is preferably 2% to 20% by mass, more preferably 2% to 15% by mass, still more preferably 2% to 7% by mass for the purpose of further improving the shakiness-reducing properties and stress relaxation-reducing properties.

### ((a-5) Polymer polyol)

The polymer polyol for component (a-5) is a polymer polyol obtained through graft-copolymerization of an acrylonitrile-styrene copolymer to a polyether polyol, where the polyether polyol is a polyether polyol which is obtained through ring-opening polymerization of EO and PO and which has a molar ratio of EO units to PO units [EO units/PO units] of 5/95 to 25/75 and a number average molecular weight of 3,000 to 7,000. In addition, it is preferable that the above-described polyether polyol be a block copolymer which is obtained through ring-opening polymerization of EO and PO. Furthermore, it is preferable that a block including EO units be present in molecular ends, and it is more preferable that the interior of the molecule be a block including PO units and that the molecular ends be blocks including EO units. That is, the amount of EO units present in the interior of the molecule is preferably 5mol% or less, more preferably 3mol% or less, still more preferably substantially 0mol%.

A hardness can be imparted to the polyurethane foam by the polymer polyol, and the component (a-5) can effectively be used for uniforming hardnesses of specimens in evaluating stress relaxation-reducing properties or shakiness-reducing properties thereof.

When the molar ratio of EO units to PO units in component (a-5) is within the above-described range, favorable moldability can be retained. From the same point of view, the molar ratio of EO units to PO units [EO units/PO units] in component (a-5) is preferably 10/90 to 30/70.

Furthermore, when the number average molecular weight of component (a-5) is within the above-described range, the viscosity will not become large, and mass production can also be retained. Form the same point of view, the number average molecular weight is preferably 4,000 to 6,000.

It is preferable that the number of hydroxyl groups contained in one molecule of component (a-5) be generally 2 to 4, particularly 3. When the number of hydroxyl groups is 4 or less, the viscosity of the raw material will not increase. Additionally, in general, it is preferable that the unsaturation degree be 0.03 mEq/g or less.

In cases where component (A) includes component (a-5), in general, the content of component (a-5) in polyol component (A) is preferably 40% to 60% by mass, more preferably 45% to 55% by mass.

The viscosity of above-described polyol component (A) (in cases where plural types of polyols are combined as component (A), the viscosity of the mixture of all polyols is referred to) is preferably 3,000 mPa·s or less, and more preferably 1, 800 mPa·s or less at a liquid temperature of 25°C. By using polymer polyols within such a viscosity range, the viscosity increasing rate of the polyurethane foaming liquid can be suppressed, thereby enhancing an efficiency in stirring the foaming liquid, and thus, the isocyanate groups and the hydroxyl groups can be reacted more uniformly. Consequently, not only the generation efficiency of the generated gas is increased compared to conventional technologies, but also, with regard to gas generation sites, the gas generates uniformly in the polyurethane foaming liquid, thereby providing a lightweight and uniform polyurethane foam-molded article. In addition, the "viscosity" in the present invention refers to a viscosity measured with a capillary viscometer at a liquid temperature of 25°C according to JIS Z8803-1991.

### <(B) Polyisocyanate Component>

For the polyisocyanate component used as component (B) in the foaming liquid, various types of publicly known polyfunctional aliphatic, alicyclic or aromatic isocyanates can be used. For example, tolylene diisocyanate (TDI), diphenylmethane diisocyanate (MDI), dicyclohexylmethane diisocyanate, triphenyl diisocyanate, xylene diisocyanate, polymethylene polyphenylene polyisocyanate, hexamethylene diisocyanate, isophorone diisocyanate, o-toluidine diisocyanate, naphthylene diisocyanate, xylylene diisocyanate and lysine diisocyanate can be mentioned. One type of the isocyanates may be used singularly, or two or more types of the isocyanates may be combined.

In the present invention, tolylene diisocyanate (TDI) and/or diphenylmethane diisocyanate (MDI) are preferably contained in terms of their resulting favorable molding density range.

The content of the polyisocyanate as the component (B) in the foaming liquid is not particularly limited. However, the content may be desirably selected in such a way that the molar ratio of isocyanate groups in the polyisocyanate component to active hydrogen groups in the foaming liquid is preferably 60/100 to 120/100, and more preferably from 70/100 to 115/100, in order to cause no failure in stirring the foaming liquid and to obtain a favorable foaming state.

### <(C) Foaming agent>

In the foaming liquid, a foaming agent is generally used as component (C). In general, water is preferably used as the foaming agent. Since water reacts with a polyisocyanate to produce carbon dioxide gas, water functions as a foaming agent. Additionally, besides water, foaming agents which have generally been used in production of polyurethane foams (e.g. hydrogen atom-containing halogenated hydrocarbons, liquefied carbon dioxide, and hydrocarbons having low boiling points) can also be used.

The mixing amount of component (C) is not particularly limited. However, the mixing amount is preferably 0.1 to 10 parts by mass, more preferably 0.3 to 5 parts by mass, still more preferably 0.3 to 3 parts by mass relative to 100 parts by mass of polyol component (A). When the mixing amount of component (C) is 0.1 part by mass or more relative to 100 parts by mass of polyol component (A), an sufficient effect to suppress the shakiness can be obtained.

### <(D) Catalyst>

The foaming liquid contains a catalyst as component (D) in terms of the reactivity in foam-molding. As the catalyst, those which have widely been used in production of polyurethane foams can be used, and one type of a catalyst may be used, or two or more types of catalysts may be combined, depending on purposes and requirements. Specific examples thereof include an amine catalyst such as tetramethylhexamethylenediamine, pentamethyldiethylenetriamine, dimethylcyclohexylamine, bis(dimethylaminoethyl)ether, tetramethylpropylenediamine, trimethylaminoethylpiperazine, tetramethylethylenediamine, dimethylbenzylamine, methylmorpholine, ethylmorpholine, triethylenediamine and diethanolamine; and tin-based catalysts such as stannous octate and dibutyltin laurate. Commercially available products may be used as the catalyst, and, for example, triethylenediamine ("TEDA-L33" produced by Tosoh Corporation) and bis(dimethylaminoethyl)ether ("TOYOCAT-ET" produced by Tosoh Corporation) can suitably be used.

Additionally, the amount of component (D) mixed in the foaming liquid is not particularly limited. However, in general, the amount is preferably 0.05 to 0.5 part by mass, more preferably from 0.1 to 5 parts by mass, still more preferably 0.1 to 3 parts by mass, and particularly preferably 0.1 to 1 part by mass relative to 100 parts by mass of polyols of above-described component (A).

### <Optional Components>

As optional components, (E) a foam stabilizer and/or (F) a crosslinking agent can be combined in the foaming liquid. Furthermore, various types of additives may be combined therein, depending on necessity, and, for example, a colorant such as a pigment, a chain extender, a filler such as calcium carbonate, a flame retardant, an antioxidant, an ultraviolet ray absorbent, a light stabilizer, an electroconductive substance such as carbon black, and an antimicrobial agent can be combined therein. In this case, it is acceptable that the mixing amounts of the additives be within ranges which have generally been used.

### ((E) Foam Stabilizer)

As the foam stabilizer for component (E), those which have widely been used for polyurethane foam-molded articles can be used, and, for example, various types of silicone-based foam stabilizers such as siloxane-polyether block copolymers can be used.

In general, the amount of the foam stabilizer (E) mixed in the polyurethane foaming liquid is preferably 0.3 to 5 parts by mass, more preferably 0.3 to 3 parts by mass, still more preferably 0.3 to 2 parts by mass relative to 100 parts by mass of polyols of above-described component (A). When the amount is 0.3 part by mass or more, a state of stirring the polyol component and the isocyanate component may be made favorable, thereby facilitating production of a desired urethane foam.

### ((F) Crosslinking Agent)

A crosslinking agent may be contained as component (F) in the polyurethane foaming liquid. As the crosslinking agent for component (F), those which have widely been used for polyurethane foam-molded articles can be used.

In general, the amount of the crosslinking agent (F) mixed in the polyurethane foaming liquid is preferably 0.5 to 10 parts by mass relative to 100 parts by mass of polyols of above-described component (A). When the amount is 0.5 part by mass or more, effects of the crosslinking agent can sufficiently be obtained. On the other hand, when it is 10 parts by mass or less, a suitable state of closed cells may be obtained, thereby retaining favorable molding properties, and also, disappearance of foam does not occur.

### <Preparation of Foaming Liquid>

A method for preparing the foaming liquid in the present invention is not particularly limited. For example, a method in which a mixture including the components other than component (B) (which may be hereinafter abbreviated as a "polyol mixture") is prepared, and then, the mixture is mixed with polyisocyanate component (B) can be preferably mentioned.

For the purpose of preventing contact between the foaming agent (C) and the catalyst (D) as much as possible, the preparation of the polyol mixture is preferably performed in such a manner that the catalyst (D) is mixed with the above-described polyol component (A), the other components including the foam stabilizer (E) and the crosslinking agent (F) are then mixed therewith, and, finally, the foaming agent (C), which is a foaming component, is mixed therewith.

In the present invention, the polyol mixture preferably has a viscosity of 2,400 mPa·s or less at a liquid temperature of 25°C. This is because the efficiency in stirring of the polyurethane foaming liquid may be improved, thereby providing a desired polyurethane foam-molded article with sufficient and uniform foaming. In this point of view, the viscosity of the polyol mixture at a liquid temperature of 25°C is preferably 1,800 mPa·s or less.

### <Foam-molding of Polyurethane Foam>

As to a method of foam-molding the polyurethane foam, a conventionally-known foam-molding method in which the polyurethane foaming liquid is injected into a cavity formed in a mold, and then, foam-molding is performed can be adopted. However, it is preferable that the timed pressure release (TPR) be combined therein.

In the present invention, the TPR reduces the pressure in the mold, thereby forming interconnected air bubbles. More specifically, after the step of supplying the foaming liquid into the cavity formed in the mold and after 20 to 50 seconds passed from the gel time, a step of reducing the pressure in the mold by 0.15 to 0.25 MPa may be included. The gel time refers to the time when an increase in the viscosity occurs, thereby generating a certain gel strength, after mixing the polyols and the isocyanate.

For the purpose of preventing the components of the polyurethane foaming liquid from being separated, it is preferred that the polyurethane foaming liquid is prepared by mixing the above-described components immediately before injecting the polyurethane foaming liquid into the cavity of the mold. At this time, the liquid temperature of the foaming liquid is generally preferably 10°C to 50°C, more preferably 20°C to 40°C, and still more preferably 25°C to 35°C. The order of mixing the components is not particularly limited. However, for the purpose of preventing an unnecessary increase in the viscosity from occurring before preparing the polyurethane foaming liquid, it is preferred that at least the polyols of the component (A) be mixed finally with the isocyanate of the component (B). Subsequently, immediately after preparing the foaming liquid, the foaming liquid is injected, under the atmospheric pressure, into the cavity of the mold in which the cavity can be depressurized, and, immediately after completing the injection, the depressurization is started. Thereafter, foaming and curing are performed in the mold, and the product of the present invention is obtained by releasing it from the mold. In general, the temperature of the mold is preferably 40°C to 80°C, more preferably 50°C to 70°C, and still more preferably 60°C to 65°C.

### <Properties of Polyurethane Foam>

The polyurethane foam of the present invention preferably has, as properties thereof, a stress relaxation of 12% or less, more preferably 11% or less, and generally still more preferably 10.5% or less, for the purpose of preventing car sickness and improving the comfort to sit.

Moreover, according to the polyurethane foam of the present invention, the shakiness can be suppressed, and, when the polyurethane foam is used as a vehicle seat pad, inclining of the seat can be suppressed during turning a corner.

Furthermore, where the hardness at an ordinary temperature (23°C) is regarded as 100, the hardness at 0°C may be 109 or less (may be 108 or less, or may be 106 or less in more favorable one), or the hardness at -15°C may be 121 or less (may be 119 or less, or may be 116 or less in more favorable one). Thus, an increase in the hardness under low-temperature environment is small, and therefore, a comfort to sit can be obtained independently of temperature. Additionally, the hardness is a value calculated in accordance with the method described in Examples.

### Example

Next, the present invention will be described in more detail with reference to examples below. However, the present invention is not to be considered limited to the examples.

### (Evaluation Methods)

Polyurethane foams produced in Examples and Comparative Examples were evaluated by the following methods.

### (1) 25% hardness

A load (kgf) required for compressing each of polyurethane foams by 25% was measured under environmental conditions of 23°C and 50% relative humidity with an instron-type compression testing machine. Furthermore, 25% hardnesses at 0°C and -15°C were measured in the same manner. Then, corresponding values therefor were calculated where the 25% hardness at 23°C was regarded as a standard (100), and a degree of increase in the hardness under low-temperature environment was studied.

### (2) Stress Relaxation (%)

Each of the polyurethane foams was compressed by a distance equal to 75% of its initial thickness at a velocity of 50 mm/min with a circular pressure plate having a diameter of 200 mm. Thereafter, the load was removed, and the polyurethane foam was allowed to stand for 1 minute. The polyurethane foam was again applied with the load at the same velocity, and, at the time when the load reached 196 N (20 kgf), the pressure plate was stopped, and, after allowing it to stand for 5 minutes, the load was read out. The stress relaxation was calculated according to the following expression. Stress relaxation rate (%) = 100 × [the load when the pressure plate was stopped (196 N) - a load after allowing the polyurethane foam to stand for 5 minutes]/the load when the pressure plate was stopped (196 N)

The smaller the value is, the more superior the polyurethane foam is in stress relaxation-reducing properties.

### (3) Shakiness-reducing properties

Fig. 1 is a schematic illustration showing an apparatus for measuring a shaking angle. A jig 3 equipped with an angle meter 2 was placed on a specimen of a seat pad 1, and, when a force of 0 to 59 N was applied to the jig 3 in the horizontal direction, an inclination of the jig 3 was measured with the angle meter 2. The measured inclination was used as an index for shakiness-reducing properties.

The smaller the value is, the more superior the polyurethane foam is in shakiness-reducing properties.

### Examples 1 to 3 and Comparative Examples 1 to 3

Each of foaming liquids was prepared according to the composition formulations shown in Table 1. On the preparation, a polyol mixture containing components other than polyisocyanate component (B) was prepared, and then, polyisocyanate component (B) was mixed therewith. A polyol component (A) and a catalyst (D) were first mixed, a foam stabilizer (E) was then mixed therewith, and a foaming agent (C) (water) was finally mixed therewith to thereby prepare each polyol composition. During the preparation, the temperature of each polyurethane foaming liquid was adjusted to 30°C.

Subsequently, immediately after preparation of each foaming liquid, the foaming liquid was injected, under the atmospheric pressure, into a cavity of a mold in which the cavity can be depressurized, where the preset temperature was 60°C, and, immediately after completing the injection, the depressurization was started. Thereafter, foaming and curing were performed in the mold, and, when 30 seconds passed from the gel time, the pressure in the mold was reduced by 0.2 MPa. Thereafter, a polyurethane foam for a seat pad was obtained by releasing it from the mold. The resulting polyurethane foam was evaluated by the above-described methods. The evaluation results are shown in Table 1.

[Table 1]

**Table 1**

| | | | | | Examples | | | Comparative Examples | | |
|---|---|---|---|---|---|---|---|---|---|---|
| | | | | | 1 | 2 | 3 | 1 | 2 | 3 |
| Compositions of foaming liquids (parts by mass) | (A) | Polyether polyol (a-1) ¹⁾ | | | 44 | 41 | 38 | 45 | 40 | 45 |
| | | Polyether polyol (a-2) ²⁾ | | | 6 | 9 | 12 | | | |
| | | Polyether polyol (a-3) ³⁾ | | | 3 | 3 | 3 | 3 | 3 | 3 |
| | | Polyether polyol (a-4) ⁴⁾ | | | | | | 5 | 10 | |
| | | Polymer polyol (a-5) ⁵⁾ | | | 47 | 47 | 47 | 47 | 47 | 47 |
| | (C) | Foaming agent (water) | | | 2.4 | 2.4 | 2.4 | 2.4 | 2.4 | 2.4 |
| | (D) | Catalyst⁶⁾ | | | 0.6 | 0.6 | 0.6 | 0.6 | 0.6 | 0.6 |
| | (E) | Silicone foam stabilizer⁷⁾ | | | 0.7 | 0.7 | 0.7 | 0.7 | 0.7 | 0.7 |
| | Total (excluding (B)) | | | | 103.7 | 103.7 | 103.7 | 103.7 | 103.7 | 103.7 |
| | (B) | Polyisocyanate⁸⁾ | TDI/MDI (mass ratio) | | 80/20 | 80/20 | 80/20 | 80/20 | 80/20 | 80/20 |
| Characteristic values of polyurethane foams | 25% hardness (05°C)/25% hardness (23°C) | | | | 104.9 | 107.6 | 108.6 | 106.8 | 110.3 | 102.4 |
| | 25% hardness (-155°C)/25% hardness (23°C) | | | | 114.4 | 118.1 | 120.9 | 117.6 | 123.6 | 111.7 |
| | Stress relaxation [%] | | | | 10.4 | 10.9 | 12.0 | 10.8 | 11.8 | 7.6 |
| | Shaking angles (°) | | Force (N) | 0 | - | - | - | - | - | - |
| | | | | 9.8 | 1.7 | 1.4 | 1.1 | 1.5 | 1.2 | 2.3 |
| | | | | 19.6 | 3.9 | 3.4 | 2.9 | 3.6 | 3.3 | 4.9 |
| | | | | 29.4 | 6.1 | 5.6 | 4.9 | 5.9 | 5.3 | 7.8 |
| | | | | 39.2 | 7.8 | 7.6 | 7.0 | 7.9 | 7.4 | 10.3 |
| | | | | 49.0 | 11.1 | 10.6 | 9.8 | 11.0 | 10.4 | 13.6 |
| | | | | 58.8 | 16.7 | 15.8 | 14.5 | 16.6 | 15.1 | 18.9 |

Annotations in Table 1 are explained as follows:
1) Polyether polyol (a-1) : EO/PO (molar ratio) =13/87; a number average molecular weight of 7,500; a number of functional groups of 3; a glass-transition point of -68°C
2) Polyether polyol (a-2): EO/PO (molar ratio)=65/35; a mixture of number average molecular weights of 1, 600 and 5, 000; a number of functional groups of 3; a glass-transition point of -66°C
3) Polyether polyol (a-3) : EO 100%; a number average molecular weight of 400; a number of functional groups of 4; a glass-transition point of -60°C
4) Polyether polyol (a-4) : PO 100%; a number average molecular weight of 700; a number of functional groups of 3; a glass-transition point of -63°C
5) Polymer polyol (a-5): EO/PO (molar ratio)=15/85; a number average molecular weight of 5,000; a number of functional groups of 3; a glass-transition point of -67°C
6) Catalyst: triethylenediamine and (2-dimethylaminoethyl)ether ("TEDA-L33" and "TOYOCAT-ET" (trade names) produced by Tosoh Corporation)
7) Silicone foam stabilizer ("SZ1325" (trade name) produced by Toray Dow Corning Co., Ltd.)
8) Polyisocyanate: TDI and MDI were mixed in such a way that TDI/MDI (mass ratio) was 80/20 and that NCO groups/active hydrogen groups in the foaming liquid (molar ratio) was 95/15 to 100/0. ("Cosmonate (registered trademark) T-80" produced by Mitsui Chemicals, Inc. was used as TDI, and "MR-200HR" produced by Nippon Polyurethane Industry Co., Ltd. was used as MDI.)

In Table 1, between Example 1 and Comparative Example 1 as well as between Example 3 and Comparative Example 2, their formulations were adjusted such that their stress relaxation-reducing properties and shakiness-reducing properties became almost identical to each other. Therefore, when comparing these formulations, it is understood that, in Example 1, increases in the hardness could be suppressed even under the low-temperature environment conditions of 0°C and -15°C as compared with Comparative Example 1. In the same manner, it is understood that, in Example 3, increases in the hardness could be suppressed even under the low-temperature environment conditions of 0°C and -15°C as compared with Comparative Example 2.

Furthermore, it is understood that, also in Example 2, superior stress relaxation-reducing properties and shakiness-reducing properties could be combined and that increases in the hardness under the low-temperature environmental conditions were small in Example 2.

Additionally, in Comparative Example 3 in which only polyether polyols (a-1), (a-3) and (a-5) were used as polyol component (A), the shakiness-reducing properties were inferior.

### Industrial Applicability

The polyurethane foam of the present invention can combine higher levels of shakiness-reducing properties and stress relaxation-reducing properties, and an increase in the hardness of the polyurethane foam under low-temperature environment is small. Therefore, the polyurethane foam of the present invention is suitable for a seat pad. In particular, the seat pad does not shake during turning a corner, and can suppress inclination of the human body when a centrifugal acceleration is applied to the human body during turning a corner, and therefore, the polyurethane foam of the present invention is also suitable as a seat pad for vehicles.

### Description of Symbols

- 1: specimen of seat pad
- 2: angle meter
- 3: jig

## Claims

1. A polyurethane foam for a seat pad produced by foam-molding a foaming liquid containing (A) a polyol component and (B) a polyisocyanate component, wherein
the polyol component (A) comprises, based on said polyol component, 30% to 55% by mass of (a-1) a polyether polyol, wherein said polyether polyol (a-1) is a block copolymer obtained through ring-opening polymerization of ethylene oxide and propylene oxide, and has a molar ratio of repeating units derived from ethylene oxide to repeating units derived from propylene oxide of 5/95 to 25/75 and a number average molecular weight of 6,000 to 8,000, and
the polyol component (A) further comprises, based on said polyol component, 2% to 20% by mass of (a-2) a polyether polyol, wherein said polyether polyol (a-2) is a block copolymer obtained through ring-opening polymerization of ethylene oxide and propylene oxide, and has a molar ratio of repeating units derived from ethylene oxide to repeating units derived from propylene oxide of 30/70 to 90/10 and a glass-transition point of -65°C or less.

2. The polyurethane foam for a seat pad according to Claim 1, wherein the polyisocyanate component (B) comprises tolylene diisocyanate and/or diphenylmethane diisocyanate.

3. The polyurethane foam for a seat pad according to Claim 1 or 2, wherein the foaming liquid comprises the polyisocyanate component (B) in such a way that a molar ratio of isocyanate groups in the polyisocyanate component to active hydrogen groups in the foaming liquid is 60/100 to 120/100.

4. The polyurethane foam for a seat pad according to any one of Claims 1 to 3, wherein the polyol component (A) further contains 1% to 10% by mass of (a-3) a polyether polyol which is obtained through ring-opening homopolymerization of ethylene oxide and which has a number average molecular weight of 350 to 2,000.

5. The polyurethane foam for a seat pad according to any one of Claims 1 to 4, wherein the glass-transition point of the component (a-2) is -80°C to -65°C.

6. The polyurethane foam for a seat pad according to any one of Claims 1 to 5, wherein the polyol component (A) further comprises, based on said polyol component, 40% to 60% by mass of (a-5) a polymer polyol obtained through graft-copolymerization of an acrylonitrile-styrene copolymer to a polyether polyol, wherein said polyether polyol is obtained through ring-opening polymerization of ethylene oxide and propylene oxide, and has a molar ratio of repeating units derived from ethylene oxide to repeating units derived from propylene oxide of 5/95 to 25/75 and a number average molecular weight of 3,000 to 7,000.

7. The polyurethane foam for a seat pad according to any one of Claims 1 to 6, further containing (E) a foam stabilizer.
